(19) Europäisches Patentamt
European Patent Office
Office européen des brevets

(11) Veröffentlichungsnummer: **0 074 562**
**B1**

(12) # EUROPÄISCHE PATENTSCHRIFT

(45) Veröffentlichungstag der Patentschrift: **24.04.85**

(51) Int. Cl.[4]: **C 09 B 29/42**// D06P3/54, D06P1/18

(21) Anmeldenummer: **82108029.8**

(22) Anmeldetag: **01.09.82**

(54) **Azofarbstoffe.**

(30) Priorität: **12.09.81 DE 3136290**

(43) Veröffentlichungstag der Anmeldung: **23.03.83 Patentblatt 83/12**

(45) Bekanntmachung des Hinweises auf die Patenterteilung: **24.04.85 Patentblatt 85/17**

(84) Benannte Vertragsstaaten: **CH DE FR GB LI**

(56) Entgegenhaltungen:
**DE-A- 1 544 446**
**FR-A- 2 160 583**
**FR-A- 2 398 141**
**US-A- 4 140 684**
**Die Akte enthält technische Angaben, die nach dem Eingang der Anmeldung eingereicht wurden und die nicht in dieser Patentschrift enthalten sind.**

(73) Patentinhaber: **BAYER AG**
**Konzernverwaltung RP Patentabteilung**
**D-5090 Leverkusen 1 Bayerwerk (DE)**

(72) Erfinder: **Brandt, Horst, Dr.**
**Antoniusstrasse 4**
**D-5068 Odenthal (DE)**
Erfinder: **Leverenz, Klaus, Dr.**
**Heymannstrasse 44**
**D-5090 Leverkusen 1 (DE)**
Erfinder: **Otten, Hans-Günter, Dr.**
**Kurt-Schumacher-Ring 91a**
**D-5090 Leverkusen 1 (DE)**

EP 0 074 562 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Gegenstand der Erfindung ist der Azofarbstoff der Formel

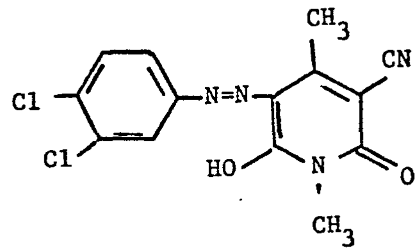

Man erhält diesen Farbstoff in üblicher Weise durch Diazotieren und Kuppeln. In diesem Zusammenhang sei auf DE-A-1 932 806 und FR-A-2 398 141 verwiesen, worin auch die strukturell nächstvergleichbaren bekannten Farbstoffe beschrieben sind.

Der Farbstoff zeichnet sich durch hohe Farbstärke und gutes Migriervermögen aus und eignet sich daher hervorragend zum Färben von synthetischen Fasern, insbesondere Polyesterfasern, welche in einem klaren, grünstichig gelben Farbton gefärbt werden. Hervorzuheben ist dabei die hohe Farbausbeute-unabhängig vom pH-Wert des Färbebades.

Die erhaltenen Färbungen weisen gute Allgemeinechtheiten auf.

Beispiel

235 g 3,4-Dichloranilin werden in 1 000 ml 20 %iger Salzsäure fein verteilt. Nach Zugabe von 800 g Eis läßt man während 45 Minuten 336 ml einer 30 %igen Natriumnitritlösung bei 0-5 °C zulaufen. Man rührt 90 Minuten bei 5-10 °C nach, filtriert Ungelöstes ab und zerstört den Nitritüberschuß mit Amidosulfonsäure.

Die erhaltene Diazoniumsalzlösung läßt man dann bei 0-5 °C während 15 Minuten zu einer Lösung von 500 g N-Methyl-3-cyan-4-methyl-6-hydroxy-pyridon-2 (in Form des feuchten Preßkuchens, der die äquivalente Menge Wirkstoff enthält) in 1 000 ml Eiswasser und 150 ml 40 %iger Natronlauge laufen. Durch Zugabe von ca. 300 ml Natronlauge (40 %) wird ein pH-Wert von 6-7 eingestellt. Man rührt noch 1,5-2 Stunden nach und isoliert den Farbstoff durch Filtration. Nach dem Waschen mit Wasser und Trocknen erhält man den erfindungsgemäßen Farbstoff in 95 %iger Ausbeute, der rein genug ist für übliche Applikationszwecke.

Der Farbstoff wird bevorzugt in fein dispergierter Form zum Färben eingesetzt. Dazu wird der feuchte Preßkuchen in mit üblichen Dispergiermitteln angeschlagen, in Sand- oder Perlmühlen auf eine Korngröße < μ gemahlen und anschließend sprühgetrocknet.

**Patentansprüche**

1. Azofarbstoff der Formel

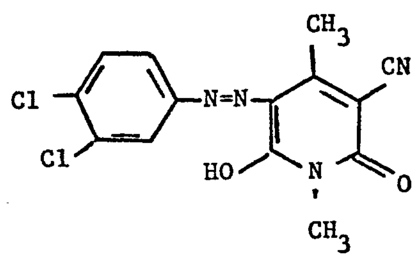
.

2. Verwendung des Farbstoffs gemäß Anspruch 1 zum Färben von Polyesterfasern.

**Claims**

1. Azo dyestuff of the formula

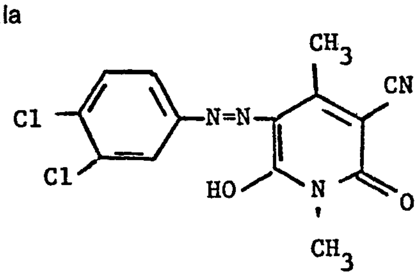

2. Use of the dyestuff according to Claim 1, for dyeing polyester fibres.

**Revendications**

1. Colorant azoïque de formule

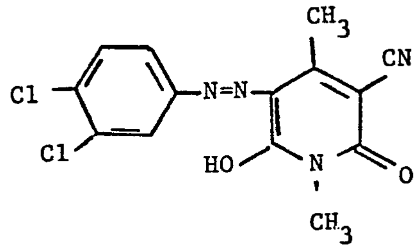

2. Utilisation du colorant selon la revendication 1, pour teindre des fibres de polyester.